# FASCICULE DE BREVET EUROPEEN

(11) **EP 3 109 799 B1**
(45) Date de publication et mention de la délivrance du brevet: **17.10.2018**
(21) Numéro de dépôt: 15166186.5
(22) Date de dépôt: 04.05.2015
(51) Int. Cl.: G06K 19/077

(54) **PROCEDE DE FABRICATION D'UNE ETIQUETTE MULTICOUCHE DE TYPE RFID, ETIQUETTE MULTICOUCHE RFID ET SON UTILISATION**
HERSTELLUNGSVERFAHREN EINES MEHRSCHICHTENETIKETTS VOM TYP RFID, RFID-MEHRSCHICHTENETIKETT UND SEINE ANWENDUNG
METHOD FOR PRODUCING A MULTILAYER RFID TAG, MULTILAYER RFID TAG AND USE THEREOF

(30) Priorité: 15.04.2015 EP 15163771
(43) Date de publication de la demande: 28.12.2016
(73) Titulaire: Maintag, 94100 Saint Maur des Fosses (FR)
(72) Inventeur: Carle, Arnaud, 94300 VINCENNES (FR)
(74) Mandataire: Gauchet, Fabien Roland

(56) Documents cités:
- EP-A1- 1 548 674
- EP-A1- 2 830 005
- EP-A2- 2 172 878
- WO-A1-2009/147547

## Description

### DOMAINE TECHNIQUE DE L'INVENTION

L'invention se rapporte au domaine des étiquettes de type RFID. Plus particulièrement, l'invention concerne un procédé de fabrication d'une étiquette multicouches de type RFID comprenant une puce incorporée entre plusieurs couches de substrats. L'invention concerne en outre ladite étiquette RFID ainsi que son utilisation.

### ETAT DE LA TECHNIQUE ANTERIEURE

De manière générale la radio-identification, désignée par le sigle RFID, est une méthode pour mémoriser et récupérer des données à distance en utilisant des marqueurs appelés radio-étiquette ou bien « étiquette RFID ».

On peut donner la définition suivante à la RFID - Radio Frequency Identification : Technologie d'identification automatique qui utilise le rayonnement radiofréquence pour identifier des objets porteurs d'étiquettes lorsqu'ils passent à proximité d'un interrogateur.

Un système RFID se compose généralement - d'une station de base (fixe ou mobile) comprenant une antenne intégrée ou non; - d'une étiquette, et d'une liaison numérique vers un utilisateur à travers un système informatique.

Les étiquettes RFID sont de petits objets, tels que des étiquettes autoadhésives, qui peuvent être collés ou incorporés dans des objets ou produits. Les étiquettes RFID comprennent une antenne associée à une puce électronique qui leur permet de recevoir et de répondre aux requêtes radio émises depuis un émetteur-récepteur. Les puces électroniques contiennent un identifiant et éventuellement des données complémentaires. Certaines puces électroniques disposent d'une autre zone mémoire dans laquelle l'utilisateur peut écrire, modifier, effacer ses propres données. La taille de ces mémoires varie de quelques bits à quelques dizaines de kilobits.

Cette technologie d'identification peut être utilisée pour identifier des objets, comme un code-barres, les personnes, en étant intégrée dans les passeports, cartes de paiements, etc (carte sans contact), ainsi que pour les animaux domestiques. Différents méthodes sont proposées pour fabriquer une étiquette de type RFID.

Dans les étiquettes de type RFID, la puce électronique est fixée sur la surface extérieure d'un des substrats et les connecteurs électriques sont visibles et dépassent à l'extérieur. De cette manière, la surface desdites étiquettes n'est pas plane du fait de la puce fixée sur la surface extérieure. Ainsi, la puce n'est pas protégée car ses connecteurs électriques risquent de se rompre. Par ailleurs, les étiquettes existantes, constituées de plusieurs couches non homogènes de matériaux ne peuvent pas être placées sur les surfaces courbées car la puce électronique associée peut se casser. Par conséquent, pour ces étiquettes, il existe notamment un problème de résistance à la flexion.

EP 1 548 674 A1 divulgue un procédé de fabrication d'une étiquette multicouche comprenant les étapes selon le préambule de la revendication 1.

Afin de surmonter les inconvénients des étiquettes existantes, le demandeur propose un nouveau procédé de fabrication des étiquettes de type RFID, ainsi que les étiquettes associées.

### EXPOSE DE L'INVENTION

L'objet principal de l'invention est donc de proposer un nouveau procédé de fabrication d'une étiquette multicouche de type RFID dans lequel la puce est incorporée dans l'épaisseur des couches.

L'objet de la présente invention est la fabrication d'une étiquette multicouche comprenant une puce RFID incorporée entre plusieurs couches de substrats. Le procédé de fabrication de ladite étiquette comprend les étapes suivantes :
- fixer une première couche conductrice sur une surface principale d'un premier substrat;
- fixer une deuxième couche conductrice sur une première surface principale d'un deuxième substrat;
- fixer la puce RFID sur la première couche conductrice dudit premier substrat ;
- placer au moins une couche de résine sur une deuxième surface principale du deuxième substrat ;
- disposer le premier substrat de telle sorte que la puce soit intercalée entre la première couche conductrice dudit premier substrat, et une deuxième surface principale opposée à la première surface principale extérieure dudit deuxième substrat, afin de former un ensemble multicouche;
- presser, chauffer et faire un vide d'air dudit ensemble pour permettre à ladite couche de résine de remplir les vides liés à la porosité surfacique des surfaces intérieures des premier et deuxième substrats;
- diminuer la température afin de solidariser ledit ensemble multicouche ainsi formé.

Selon l'invention, l'étape de fixation de la puce sur le premier substrat consiste à poser la puce sur la première couche conductrice, puis à créer une connexion électrique entre la puce et la première couche conductrice dudit premier substrat par un procédé de brasure.

Selon le procédé de l'invention on dispose la puce dans l'épaisseur d'au moins une couche de résine de telle sorte que la résine soit apte à se coller à la puce.

Selon un mode particulier de l'invention une seule couche de résine est placée entre les premier et deuxième substrats afin de diminuer l'épaisseur de ladite étiquette.

Avantageusement, un lamage est réalisé sur la deuxième surface principale opposée à la première surface principale extérieure dudit deuxième substrat, ledit lamage étant disposé en vis-à-vis de ladite puce afin de ménager un espace pour la résine et la puce.

Selon un mode de réalisation de l'invention, un perçage est réalisé dans l'épaisseur dudit deuxième substrat et dans l'épaisseur de sa couche conductrice, ledit perçage étant placé en vis-à-vis de la puce afin d'y incorporer la résine et la puce.

L'invention concerne encore une étiquette de type RFID fabriquée selon le procédé ci-dessus, l'étiquette comprenant au moins un premier substrat doté d'au moins d'une première couche conductrice sur l'une de ses surfaces principales et un deuxième substrat doté d'au moins d'une deuxième couche conductrice sur l'une de ses surfaces principales; une puce electronique incorporée entre lesdits premier et deuxième substrats; des connecteurs électriques de la puce électronique incorporés entre le premier et le deuxième substrats par l'intermédiaire d'au moins une couche de résine placée entre lesdits premier et deuxième substrats,de telle sortequela surface extérieure de ladite étiquette est plane ; la couche de résine remplissant les vides liés à la porosité surfacique des surfaces intérieurs des premier et deuxième substrats; le coefficient d'élasticité de ladite couche de résine étant inférieur à celui dudit premier et dudit deuxième substrats pour permettre un maintien en flexion de ladite étiquette.

De préférence, ledit premier et ledit deuxième substrat sont en matériaux composites en PTFE chargés en céramiques, par exemple ceux de la famille RO3000. La couche de résine est préférentiellement de type pré-imprégnée (Preg).

De plus, lesdites premières et deuxièmes couches conductrices sont en métal.

Par ailleurs, la puce comprend une mémoire de capacité comprise entre 2 Koctets et 64 Koctets, par exemple 12 octets (96 bits).

Avantageusement, l'étiquette est marquable, ledit marquage est réalisé par des procédés de gravure laser et/ou des procédés de transfert thermique et/ou des procédés à jet d'encre.

L'invention concerne encore l'utilisation de l'étiquette définie ci-dessus pour identifier des pièces métalliques ou non métalliques à surfaces courbées sur lesquelles ladite étiquette est fixée.

### BREVE DESCRIPTION DES FIGURES

D'autres caractéristiques, détails et avantages de l'invention ressortiront à la lecture de la description qui suit, en référence aux figures annexées, qui illustrent:
- la figure 1, montre le principe connu de fixation d'une puce électronique en surface d'un substrat muni d'une seule couche conductrice ;
- la figure 2, illustre le principe de fixation d'une puce électronique en surface d'un substrat dans un ensemble constitué de deux substrats, chaque substrat est muni d'une couche conductrice;
- la figure 3 illustre le principe du procédé de l'invention avec plusieurs couche de résines;
- la figure 4 illustre une coupe dans l'épaisseur d'une étiquette fabriquée par le procédé selon la première variante de l'invention ;
- la figure 5 illustre une coupe dans l'épaisseur d'une étiquette fabriquée par le procédé selon la deuxième variante de l'invention ;
- la figure 6 illustre une étiquette avec sa surface plane et la puce électronique intercalée entre les substrats ;
- la figure 7 illustre une coupe dans l'épaisseur d'un matériau homogène soumis à une courbure homogène ;
- la figure 8 illustre une coupe dans l'épaisseur d'un empilement de matériaux non homogènes soumis à une courbure; et
- la figure 9 illustre une coupe dans l'épaisseur de l'étiquette selon l'invention, soumise à une courbure.

### DESCRIPTION DETAILLEE

Le but principal de l'invention est de proposer un nouveau procédé de fabrication d'une étiquette RFID.

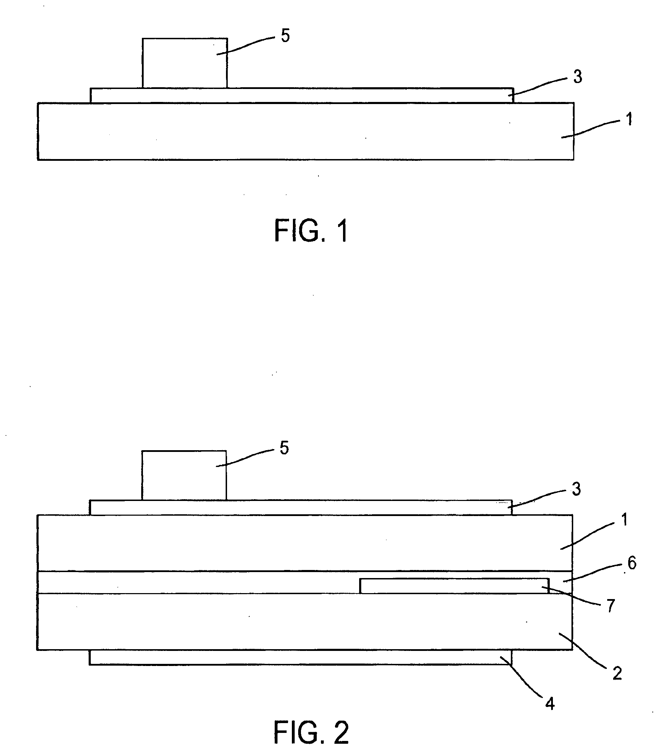

Les figures 1 et 2 montrent le principe de fixation d'une puce électronique 5 sur la surface d'un substrat conducteur. La figure 1 montre une puce électronique 5 collée sur la couche conductrice 3 d'un substrat 1, Les connecteurs de la puce sont fixés à ladite couche conductrice par exemple par brasure. La figure 2 montre le même principe de fixation d'une puce électronique 5 dans le cas d'un ensemble multicouche constitué de deux substrats conducteurs 1, 2. Une ou plusieurs couches de résine 6 peuvent être placées entre les substrats. Chaque substrat est muni d'une seule couche conductrice 3, 4. Sur la figure 2, un des substrats est muni de deux couches conductrices 4, 14. Afin de lier les deux substrats, les couches de résine 6 sont pressées, chauffées et le vide d'air est fait. La résine ainsi pressée et chauffée permet de remplir toutes les porosités surfaciques des substrats. En diminuant la température, le flux fige et colle les deux substrats ensemble. Les substrats sont ainsi solidarisés. Le procédé comprend ensuite la fixation de la puce 5 sur une couche conductrice 3 d'un des substrats comme dans le cas de la figure 1.

Dans les configurations ci-dessus, la puce électronique 5, fixée à la surface extérieure du substrat, n'est pas protégée ; de plus la surface du substrat sur laquelle la puce est fixée ne sera pas plane notamment à cause de la présence de la puce 5 qui en dépasse. En outre, la fixation de la puce sur le substrat nécessite la présence de colle.

Par conséquent, afin de protéger la puce, le procédé ci-dessus est réagencé. Ce procédé permet avantageusement de fabriquer une étiquette dans laquelle une puce électronique est intercalée entre deux substrats.

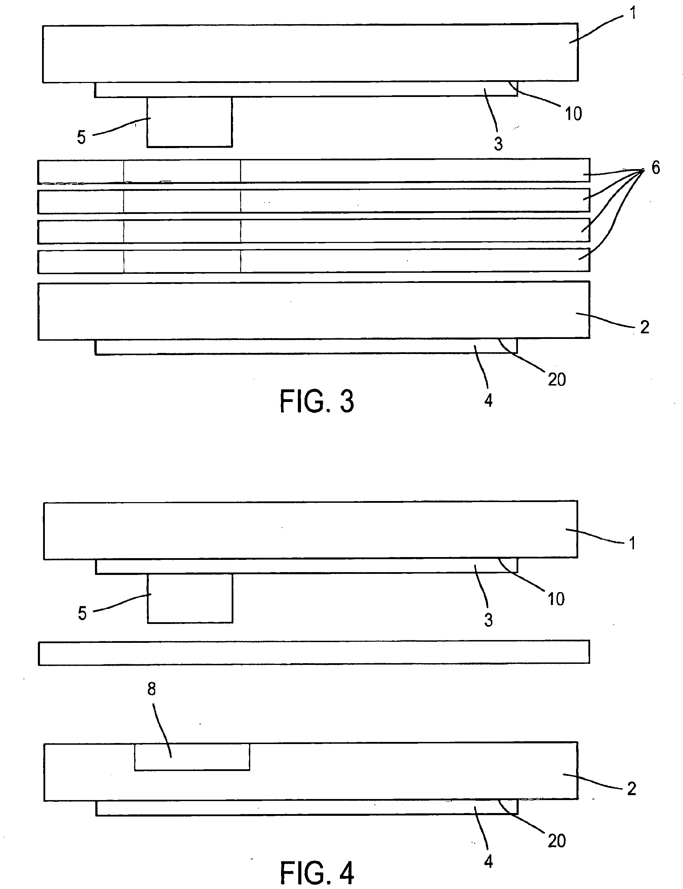

La figure 3 montre les étapes de détournement du procédé classique ci-dessus dans le cas de deux substrats 1, 2 chacun muni d'une couche conductrice 3, 4. Le procédé comprend les étapes suivantes - on fixe une première couche conductrice 3 sur un premier substrat 1, plus précisément sur une surface principale 10 du premier substrat ; on fixe une deuxième couche conductrice 4 sur une surface principale extérieure 20 d'un deuxième substrat 2 ; ensuite on fixe une puce électronique 5 sur la couche conductrice 3 dudit premier substrat 1 ; on place une ou plusieurs couches de résine 6 de type pré-imprégnée (Preg) entre le premier et le deuxième substrats 1, 2. Ensuite on dispose ledit premier substrat 1, supportant la puce 5, de telle sorte que ladite puce 5 soit intercalée entre le premier substrat 1 et le deuxième substrat 2, dans l'épaisseur des couches de résines 6. Plus précisément la puce 5 est intercalée entre la première couche conductrice 3 et la deuxième surface principale 21 opposée à la première surface principale 20 du deuxième substrat. De cette façon, la puce 5 se trouve en vis-à-vis du deuxième substrat 2. L'ensemble, incluant les couches de résine (Preg), est pressé et chauffé et le vide d'air est fait. Cela permet à la résine de remplir tous les vides liés à la porosité surfacique des surfaces intérieures des premier et deuxième substrats 1 et 2. En diminuant la température, la résine 6 se fige et permet auxdits substrats 1 et 2 de se solidariser. De cette manière la puce électronique 5 est totalement incorporée entre les substrats 1 et 2 donc protégée. De plus la surface extérieure du premier substrat 1 est plane. Le procédé ainsi réagencé permet de fabriquer une étiquette de type RFID avec une surface extérieure plane dans laquelle une puce 5 est intercalée entre les substrats 1 et 2. De plus la ou les couches 6 de résine présentes dans l'espace 12 entre la puce 5 et le substrat 1 et remplace la colle utilisée dans des configurations classiques.

Dans cet agencement, les connecteurs électriques 7 de la puce 5 se trouvent entièrement intercalés entre les premier et deuxième substrats de sorte qu'ils ne sont pas visibles de l'extérieur.

La figure 4 représente une variante de l'invention dans laquelle, une seule couche de résine 6 est placée entre les premier et deuxième substrats. Ensuite, un lamage 8 est réalisé dans ledit deuxième substrat 2 en vis-à-vis de la puce 5 pour y intégrer la résine et la puce. En effet, de cette manière la résine 6 rentre dans le lamage 8 ce qui permet de loger la puce 5 à l'intérieur du substrat, dans le lamage 8. Cette variante permet d'éviter le perçage de la ou des couches de résine 6 et ainsi l'épaisseur de l'étiquette est diminuée.

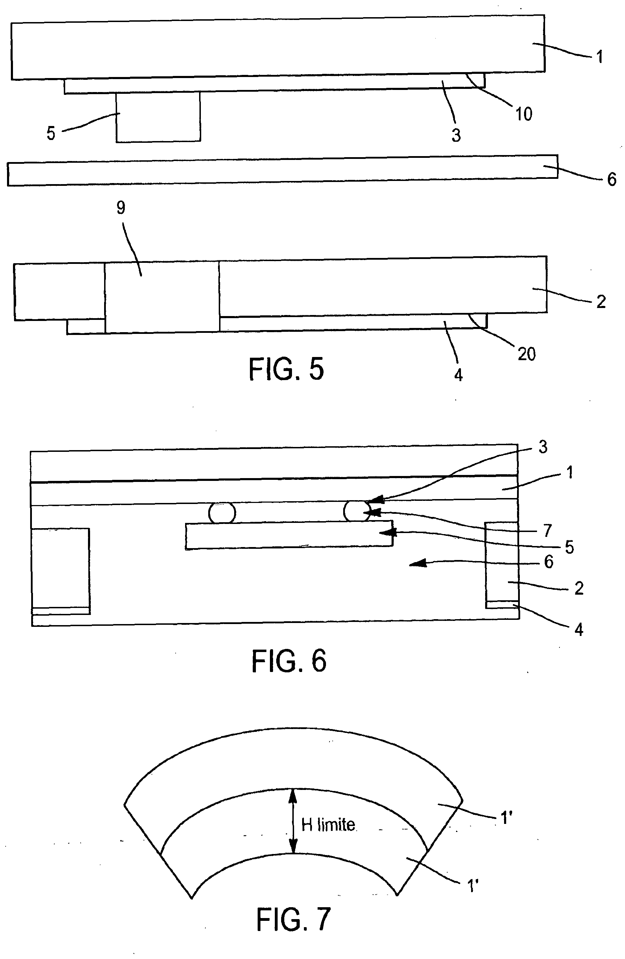

La figure 5 représente une deuxième variante de l'invention dans laquelle une seule couche de résine est prévue. Dans cette deuxième variante, un perçage 9 est réalisé dans l'épaisseur du deuxième substrat 2 et de la deuxième couche conductrice 4, en vis-à-vis de la puce 5, afin d'y loger intégralement la puce. De cette manière, d'une part, l'épaisseur de l'ensemble est diminuée et on évite ainsi le perçage de la ou des couches de résine 6. Ainsi le procédé de fabrication est simplifié.

La figure 6 représente un schéma vu en coupe d'une étiquette fabriquée par le procédé selon la deuxième variante de l'invention. Dans l'étiquette multicouche ainsi fabriquée, le premier substrat 1 et le deuxième substrat 2 sont constitués d'une composition de matériaux composites en PTFE chargés en céramiques, par exemple ceux de la famille RO3000. Le premier substrat 1 est par exemple de type RO3003, tandis que le deuxième substrat 2 est de type RO3010. Cette famille, RO3000, de compositions de matériaux composites en PTFE chargés en céramique est utilisée pour les applications en Radio fréquence (RF). La résine 6 utilisée dans la présente invention est de type pré-imprégné (Preg). Le procédé de fabrication de l'étiquette est telle ladite résine 6 remplace la colle utilisée dans des configurations classiques. En effet, dans les configurations classiques, la fixation de la puce sur la couche conductrice du substrat est effectuée au moyen d'une colle. Les couches conductrices 3 et 4 sont en métal, en particulier en cuivre. La puce 5 comprend une mémoire de capacité comprise entre 2 Ko et 64 Ko. L'accès à la mémoire est effectué par n'importe quel lecteur standard.

Par ailleurs, pour assurer la flexibilité de cette construction multicouche, il est nécessaire que chaque couche soit flexible. Le problème dans le cas d'une étiquette multicouche avec une puce incorporée est que la puce est un élément rigide et donc en cas de flexion, ses connexions électriques risquent de se rompre.

La figure 7 représente le principe de flexibilité dans un matériau homogène 1' ayant une courbure homogène, de rayon constant. Dans un matériau homogène, lors de la flexion il se crée une limite de séparation entre la zone où le matériau est comprimé et la zone où le matériau est étiré. La hauteur de cette limite nommée Hlimite, est sensiblement égale à la moitié de l'épaisseur totale du matériau.

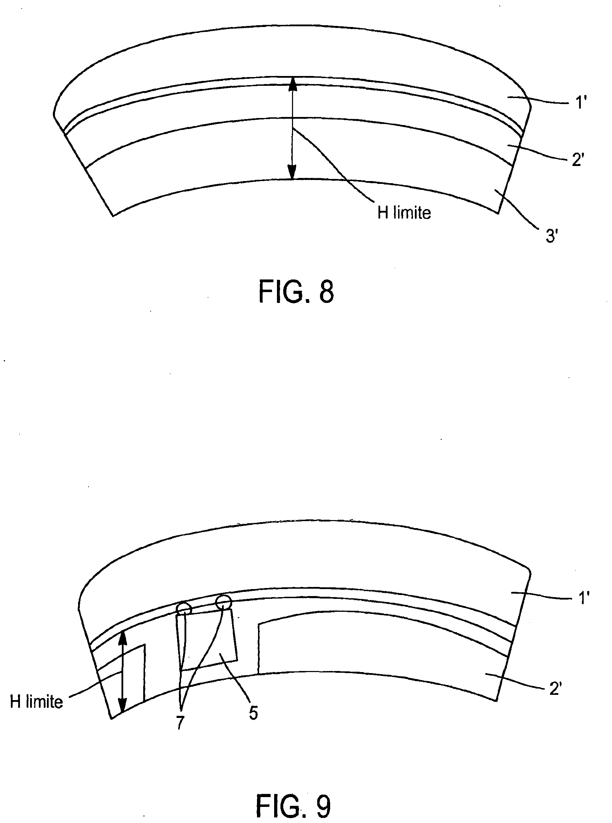

Figure 8 représente le cas d'un empilage non homogène de trois matériaux 1', 2', 3', ayant des coefficients d'élasticité différents. Dans ce cas, la hauteur de la limite de séparation Hlimite entre la zone de compression et la zone d'élongation, dépend des coefficients d'élasticité de chacun des matériaux, et elle n'est pas située à la moitié de l'épaisseur totale de l'empilage.

La figure 9 illustre le cas d'une étiquette multicouche avec une puce 5 incorporée entre les substrats. Pour assurer la résistance à la flexion de cette étiquette, il faut amener la limite de séparation Hlimite entre la zone de compression et la zone d'élongation, au niveau des connexions électriques 7. Cela permet de limiter les efforts sur ces connexions.

L'invention prévoit avantageusement l'utilisation d'une résine 6 avec un coefficient d'élasticité inférieur à celui des substrats1 ,2 entre lesquels elle est intercalée. Cet arrangement permet d'amener la limite de séparation entre la zone de compression et la zone d'élongation dans l'épaisseur de la résine. De plus, la réduction de l'épaisseur de la résine en utilisant le procédé de fabrication de l'étiquette selon la première variante ou la deuxième variante de la présente invention, permet de ramener ladite limite proche des connexions électriques 7, comme illustré sur la figure 9.

Pour des raisons ci-dessus, l'étiquette selon la présente invention résiste à la flexion et se maintient en flexion lorsqu'elle est posée sur une surface courbée.

L'étiquette ainsi fabriquée selon l'invention, peut être marquée par différents procédés, en particulier par des procédés de gravure laser et/ou des procédés de transfert thermique et/ou procédé à jet d'encre. De plus lesdites étiquettes sont imprimables.

L'invention concerne encore l'utilisation de l'étiquette ainsi fabriquée pour identifier des pièces métalliques ou non métalliques à surfaces courbées. Lesdites étiquettes ainsi fabriqués peuvent être collées à des pièces métalliques ou non métallique en utilisant des adhésifs dédiés.

Lesdites étiquettes peuvent être utilisées dans la cabine et dans des zones non pressurisés d'un avion. La communication avec la puce, y compris l'accès à toute la mémoire, peut être effectuée par n'importe quel lecteur standard compatible.

L'étiquette selon la présente invention, est apte à réaliser toutes les fonctionnalités et modes obligatoires tel que définis par la norme ISO / CEI 18000-6 Type C (EPC global Gen2).

De nombreuses combinaisons peuvent être envisagées sans sortir du cadre de l'invention ; l'homme de métier choisira l'une ou l'autre en fonction des contraintes économiques, ergonomiques, dimensionnelles ou autres à respecter.

## Revendications

1. Procédé de fabrication d'une étiquette multicouche comprenant une puce RFID incorporée entre plusieurs couches de substrats, le procédé comprenant les étapes suivantes :
- fixer une première couche conductrice (3) sur une surface principale (10) d'un premier substrat (1);
- fixer une deuxième couche conductrice (4) sur une première surface principale extérieure (20) d'un deuxième substrat (2);
- fixer la puce RFID (5) sur la première couche conductrice (3) dudit premier substrat (1) ; **caractérisé par** les étapes suivantes :
- placer au moins une couche de résine (6) sur une deuxième surface principale (21) du deuxième substrat (2);
- disposer le premier substrat (1) de telle sorte que la puce (5) soit intercalée entre la première couche conductrice (3) dudit premier substrat (1), et la deuxième surface principale (21) opposée à la première surface principale extérieure (20) dudit deuxième substrat (2), afin de former un ensemble multicouche;
- presser, chauffer et faire un vide d'air dudit ensemble pour permettre à ladite couche de résine de remplir les vides liés à la porosité surfacique des surfaces intérieures des premier et deuxième substrats (1,2);
- diminuer la température afin de solidariser ledit ensemble multicouche ainsi formé.

2. Procédé de fabrication d'une étiquette selon la revendication 1 dans lequel l'étape de fixation de la puce (5) sur le premier substrat (1) consiste à poser ladite puce (5) sur la première couche conductrice (3) ; puis à créer une connexion électrique (7) entre ladite puce (5) et ladite première couche conductrice (3) par un procédé de brasure.

3. Procédé de fabrication d'une étiquette selon la revendication 1 **caractérisé en ce qu'**on dispose la puce (5) dans l'épaisseur d'au moins une couche de résine (6) de telle sorte que la résine (6) soit apte à se coller à la puce (5).

4. Procédé de fabrication d'une étiquette selon l'une des revendications 1 à 3 **caractérisé en ce qu'**une seule couche de résine (6) est placée entre les substrats (1,2) afin de diminuer l'épaisseur de ladite étiquette.

5. Procédé de fabrication d'une étiquette selon l'une des revendications 1 à 4 **caractérisé en ce qu'**un lamage est réalisé sur la deuxième surface principale (21) opposée à la première surface principale extérieure (20) du deuxième substrat (2), et **en ce que** ledit lamage est disposé en vis-à-vis de ladite puce (5) afin de ménager un espace pour la résine (6) et la puce (5).

6. Procédé de fabrication d'une étiquette selon l'une des revendications 1 à 4 **caractérisé en ce qu'**un perçage est réalisé dans l'épaisseur dudit deuxième substrat (2) et dans l'épaisseur de la deuxième couche conductrice (4), ledit perçage étant placé en vis-à-vis de la puce (5) afin d'y incorporer la résine (6) et la puce (5).

7. Etiquette de type RFID fabriquée selon le procédé de l'une des revendications 1 à 6, l'étiquette comprenant au moins un premier substrat (1) doté d'au moins une première couche conductrice (3) sur l'une de ses surfaces principales (10) et un deuxième substrat (2) doté d'au moins d'une deuxième couche conductrice (4) sur l'une de ses surfaces principales (20) ; une puce électronique (5) incorporée entre lesdits premier et deuxième substrats (1, 2); des connecteurs électriques (7) de la puce électronique (5) incorporés entre le premier et le deuxième substrats (1,2) par l'intermédiaire d'au moins une couche de résine (6) placée entre lesdits premier et deuxième substrats (1,2) de telle sorte que la surface extérieure de ladite étiquette est plane ; la couche de résine (6) remplissant les vides liés à la porosité surfacique des surfaces intérieures des premier et deuxième substrats (1,2) ; et le coefficient d'élasticité de ladite couche de résine (6) étant inférieur à celui dudit premier et dudit deuxième substrats (1,2) pour permettre un maintien en flexion de ladite étiquette.

8. Etiquette selon la revendication 7 dans lequel ledit premier et ledit deuxième substrats (1,2) sont en matériaux composites en PTFE chargés en céramiques.

9. Etiquette selon la revendication 7 dans lequel la couche de résine (6) est de type pré-imprégnée.

10. Etiquette selon la revendication 7 dans lequel lesdites première et deuxième couches conductrices (3,4) sont en métal.

11. Etiquette selon la revendication 7 dans lequel la puce (5) comprend une mémoire de capacité comprise entre 2 Koctets et 64 Koctets.

12. Etiquette selon la revendication 7 **caractérisé en ce qu'**elle est marquable, ledit marquage est réalisé par des procédés de gravure laser et/ou des procédés de transfert thermique et/ou des procédés à jet d'encre.

13. Utilisation de l'étiquette selon l'une des revendications 7 à 12 pour identifier des pièces métalliques ou non métalliques à surfaces courbées sur lesquelles ladite étiquette est fixée.

## Patentansprüche

1. Verfahren zur Herstellung eines mehrlagigen Etiketts, welches einen RFID-Chip enthält, der zwischen mehreren Substratschichten eingesetzt ist, wobei das Verfahren aus folgenden Schritten besteht:
- der Befestigung einer ersten leitfähigen Schicht (3) auf einer Hauptfläche (10) eines ersten Substrats (1);
- der Befestigung einer zweiten leitfähigen Schicht (4) auf einer ersten äußeren Hauptfläche (20) eines zweiten Substrats (2);
- der Befestigung des RFID-Chips (5) auf der ersten leitfähigen Schicht (3) des besagten ersten Substrats (1); **gekennzeichnet durch** die folgenden Schritte:
- das Platzieren mindestens einer Harzschicht (6) auf einer zweiten Hauptfläche (21) des zweiten Substrats (2);
- die Anordnung des ersten Substrats (1) dergestalt, dass sich der Chip (5) zwischen der ersten leitfähigen Schicht (3) des besagten ersten Substrats (1) und der zweiten Hauptfläche (21) gegenüber der ersten äußeren Hauptfläche (20) des besagten zweiten Substrats (2) befindet, so dass eine mehrlagige Einheit gebildet wird;
- das Pressen und Erhitzen der Einheit und das Herstellen eines Luftvakuums in der Einheit, damit sich die Leerräume im Zusammenhang mit der Oberflächenporosität der Innenflächen des ersten und des zweiten Substrats (1, 2) füllen können;
- die Verringerung der Temperatur, damit sich die Lagen der so geformten besagten mehrlagigen Einheit fest miteinander verbinden.

2. Verfahren zur Herstellung eines Etiketts nach Anspruch 1, in welchem der Schritt der Befestigung des Chips (5) auf dem ersten Substrat (1) darin besteht, besagten Chip (5) auf die erste leitfähige Schicht (3) zu positionieren, und anschließend durch ein Lötverfahren eine elektrische Verbindung (7) zwischen besagtem Chip (5) und besagter ersten leitfähigen Schicht (3) herzustellen.

3. Verfahren zur Herstellung eines Etiketts nach Anspruch 1, **dadurch gekennzeichnet, dass** man den Chip (5) in mindestens einer Harzschichtlage (6) so anordnet, dass das Harz (6) am Chip (5) kleben bleibt.

4. Verfahren zur Herstellung eines Etiketts nach einem der Ansprüche 1 bis 3, **dadurch gekennzeichnet, dass** zwischen die Substrate (1, 2) eine einzige Harzschicht (6) platziert wird, damit das besagte Etiketts möglichst dünn bleibt.

5. Verfahren zur Herstellung eines Etiketts nach einem der Ansprüche 1 bis 4, **dadurch gekennzeichnet, dass** auf der zweiten Hauptfläche (21) gegenüber der ersten äußeren Hauptfläche (20) des zweiten Substrats (2) eine Absenkung hergestellt wird, und **dadurch gekennzeichnet, dass** die Absenkung gegenüber dem besagten Chip (5) angeordnet ist, um einen Bereich für das Harz (6) und den Chip (5) zu gestalten.

6. Verfahren zur Herstellung eines Etiketts nach einem der Ansprüche 1 bis 4, **dadurch gekennzeichnet, dass** die Lage des besagten zweiten Substrats (2) und die Lage der zweiten leitfähigen Schicht (4) durchbohrt werden, wobei besagte Bohrung gegenüber dem Chip (5) erfolgt, um dort das Harz (6) und den Chip (5) einzuarbeiten.

7. Etikett vom Typ RFID, das nach dem Verfahren nach einem der Ansprüche 1 bis 6 hergestellt wurde, wobei das Etikett mindestens ein erstes Substrat (1) umfasst, das mit mindestens einer ersten leitfähigen Schicht (3) auf einer der Hauptflächen (10) versehen ist, und ein zweites Substrat (2), das mit mindestens einer zweiten leitfähigen Schicht (4) auf einer der Hauptflächen (20) versehen ist; einen elektronischen Chip (5), der zwischen dem besagten ersten und dem besagten zweiten Substrat (1, 2) eingesetzt ist, elektrische Verbinder (7) des elektronischen Chips (5), die mithilfe mindestens einer Harzschicht (6), welche zwischen das besagte erste und das besagte zweite Substrat (1, 2) so platziert sind, dass die Außenfläche des besagten Etiketts eben ist, zwischen dem ersten und dem zweiten Substrat (1, 2) eingesetzt werden, wobei die Harzschicht (6) die im Zusammenhang mit der Oberflächenporosität der Innenflächen des ersten und des zweiten Substrats (1, 2) vorhandenen Leerräume füllt, wobei der Dehnungskoeffizient der besagten Harzschicht (6) kleiner ist als der Dehnungskoeffizient des ersten oder des zweiten Substrats (1, 2), um den biegeelastischen Halt des Etiketts zu gewährleisten.

8. Etikett nach Anspruch 7, in welchem besagtes erstes und zweites Substrat (1, 2) Verbundmaterialien aus PTFE mit Keramikchargen sind.

9. Etikett nach Anspruch 7, in welchem die Harzschicht (6) eine vorimprägnierte Schicht ist.

10. Etikett nach Anspruch 7, in welchem die besagte erste und zweite leitfähige Schicht (3, 4) aus Metall bestehen.

11. Etikett nach Anspruch 7, in welchem der Chip (5) einen Speicher mit einer Kapazität zwischen 2 KByte und 64 KByte umfasst.

12. Etikett nach Anspruch 7, **dadurch gekennzeichnet, dass** man es kennzeichnen kann, wobei besagte Kennzeichnung mit Lasergravurverfahren und/oder Thermotransferverfahren und/oder Tintenstrahlverfahren hergestellt werden kann.

13. Benutzung des Etiketts nach einem der Ansprüche 7 bis 12, um metallische oder nicht metallische Teile mit gekrümmten Oberflächen zu erkennen, an denen besagtes Etikett fixiert ist.

## Claims

1. A method for manufacturing a multilayer tag comprising an RFID tag integrated between several substrate layers, with said method comprising the following steps:
- attaching a first conductive layer (3) onto a main surface (10) of a first substrate (1);
- attaching a second conductive layer (4) onto a first main outer surface (20) of a second substrate (2);
- attaching the RFID chip onto the first conductive layer (3) of said first substrate (1);
**characterized by** the following steps:
- placing at least one resin layer (6) on a second main surface (21) of the second substrate (2);
- positioning the first substrate (1) so that the chip (5) is inserted between the first conductive layer (3) of said first substrate (1), and the second main surface (21) opposite the first main outer surface (20) of said second substrate (2), so as to form a multilayer assembly;
- pressing, heating and creating an air space in said assembly so as to enable said resin layer to fill the voids resulting from the surface porosity of the inner surfaces of the first and second substrates (1, 2);
- reducing the temperature so as to secure said multilayer assembly thus formed.

2. A method for manufacturing a tag according to claim 1, wherein the step of attaching the chip (5) onto the first substrate consists in positioning said chip (5) on the first conductive layer (3); and then in creating an electric connection (7) between said chip (5) and said first conductive layer (3) using a brazing process.

3. A method for manufacturing a tag according to claim 1, **characterized in that** the chip (5) is positioned in the thickness of at least one layer of resin (6) so that resin (6) is able to adhere to the chip (5).

4. A method for manufacturing a tag according to one of claims 1 to 3, **characterized in that** only one layer of resin (6) is placed between the substrates (1, 2) in order to reduce the thickness of said tag.

5. A method for manufacturing a tag according to one of claims 1 to 4, **characterized in that** spotfacing is performed on the second main surface (21) opposite the first outer main surface (20) of the second substrate (2), and **in that** said spotfacing is positioned so as to face said chip (5) in order to provide some space for the resin (6) and the chip.

6. A method for manufacturing a tag according to one of claims 1 to 4, **characterized in that** a bore is provided in the thickness of said second substrate (2) and in the thickness of the second conductive layer (4), with said bore being positioned so as to face the chip (5), so as to incorporate therein the resin (6) and the chip (5).

7. A tag of the RFID type produced using the method according to one of claims 1 to 6, with said tag comprising at least one first substrate (1) provided with at least one first conductive layer (3) on one of the main surfaces (10) thereof, and a second substrate (2) provided with at least one second conductive layer (4) on one of the main surfaces (20) thereof; an electronic chip (5) integrated between said first and second substrates (1, 2); electric connectors (7) for the electronic chip (5) integrated between the first and second substrates (1, 2) through at least one resin layer (6) placed between said first and second substrates (1, 2) so that the outer surface of the said tag is flat; with said resin layer (6) filling the voids caused by the surface porosity of the inner surfaces of the first and second substrates (1, 2); and with the modulus of elasticity of said resin layer (6) being smaller than that of said first and said second substrates (1, 2) so as to make it possible to keep said tag flexed.

8. A tag according to claim 7, wherein said first and said second substrates (1, 2) are made of ceramic loaded PTFE composite materials.

9. A tag according to claim 7, wherein the resin layer (6) is of the prepreg type.

10. A tag according to claim 7, wherein said first and second conductive layers (3, 4) are made of metal.

11. A tag according to claim 7, wherein the chip (5) comprises a memory having a capacity ranging from 2 Kbytes to 64 Kbytes.

12. A tag according to claim 7, **characterized in that** it can be marked, with such marking being performed using laser etching processes and/or heat transfer processes and/or ink jet processes.

13. Utilization of the tag according to one of claims 7 to 12 for identifying metallic or non metallic parts having bent surfaces whereon said tag is attached.
